# EUROPÄISCHE PATENTSCHRIFT

(11) **EP 3 476 912 B1**
(45) Veröffentlichungstag und Bekanntmachung des Hinweises auf die Patenterteilung: **17.08.2022**
(21) Anmeldenummer: 17198208.5
(22) Anmeldetag: 25.10.2017
(51) Int. Cl.: C09J 175/06, C08G 18/42, C08G 18/76

(54) **KLEBSTOFFE BASIEREND AUF POLYESTERPOLYOLEN AUF BASIS VON AUS NACHWACHSENDEN ROHSTOFFEN GEWONNENER FURANDICARBONSÄURE**
ADHESIVES BASED ON POLYESTER POLYOLS BASED ON FURANE DICARBOXYLIC ACID FROM RENEWABLE RESOURCES
ADHÉSIFS SUR LA BASE DES POLYESTER POLYOLS BASÉS SUR L'ACIDE FURANDICARBOXYLIQUE D'ORIGINE DES MATIÈRES PREMIÈRES RENOUVELABLES

(43) Veröffentlichungstag der Anmeldung: 01.05.2019
(73) Patentinhaber: Henkel AG & Co. KGaA, 40589 Düsseldorf (DE)
(72) Erfinder: BRANDT, Adrian, 45219 Essen (DE); BECK, Horst, 41470 Neuss (DE); SCHRÖDER, Kerstin, 41516 Grevenbroich/Wevelinghoven (DE); KUX, Alexander, 40789 Monheim (DE); BANKMANN, Dennis, 40595 Düsseldorf (DE); GARMANN, Helga, 40724 Hilden (DE); TOMKE, Stefan, 46147 Oberhausen (DE); PASEMANN, Timo, 46045 Oberhausen (DE); RUSSBÜLT, Kerstin, 40724 Hilden (DE)

(56) Entgegenhaltungen:
- EP-A1- 2 567 996
- WO-A1-2016/053186
- US-A1- 2012 220 680

## Beschreibung

Die vorliegende Erfindung betrifft Klebstoffe, die ein Polyesterpolyol auf Basis von aus nachwachsenden Rohstoffen gewonnener Furandicarbonsäure enthalten sowie ein Verfahren zum Kleben von Substraten, insbesondere von folienartigen Substraten, unter Verwendung des beschriebenen Klebstoffs.

Ein gesteigertes Umweltbewusstsein und die begrenzten Ressourcen für fossile Ausgangsmaterialen haben ein neues Bewusstsein für die Nachhaltigkeit von Produkten geschaffen. Das Bemühen, die gängigen Produkte, die meist auf Erdölbasis beruhen, durch Alternativen aus nachwachsenden Rohstoffen zu ersetzten, ist dabei auch im Bereich der Alltagsgegenstände und sogenannten Wegwerfprodukte in den Fokus gerückt. Bei der Suche nach Alternativen aus nachwachsenden Rohstoffen für die gängigsten Chemikalien, die die Grundlage bei der Herstellung der meisten Alltagsprodukte bilden, stellt sich zum einen das Problem geeignete Quellen zu identifizieren, die in der Lage sind, die gewünschten Stoffe in der gefragten Menge und Qualität zu liefern. Weiterhin wurde beobachtet, dass sich die physikalischen Eigenschaften von Produkten, die aus nachwachsenden Rohstoffen gewonnen wurden, teilweise von denen herkömmlicher Produkte auf Erdölbasis unterscheiden und nicht immer an diese heranreichen. Zusätzlich dazu gibt es eine Reihe von Bereichen, in denen von vornherein nur eine begrenzte Anzahl von Ausgangsmaterialien zur Verfügung steht, beispielsweise aufgrund gesetzlicher Bestimmungen. Ein solcher Bereich ist unter anderem die Lebensmittelindustrie, die insbesondere bei der Verpackung von Lebensmitteln strengen Auflagen unterliegen. So stehen generell nur wenige chemische Verbindungen zur Verfügung, die lebensmittelrechtlich und gesundheitlich als unbedenklich angesehen werden.

Es besteht daher der Bedarf an chemischen Verbindungen, die auf Basis nachwachsender Rohstoffe hergestellt werden können und die vergleichbare Eigenschaften zu den herkömmlichen Verbindungen aufweisen.

WO 2014/054940 beschreibt Polymere, die einen oder mehrere von einem Diol abgeleitete Reste und einen oder mehrere von einer Säure abgeleitete Reste aufweisen, wobei die Säure ausgewählt ist aus Dicarbonsäure und Kohlensäure und die Diolverbindung entweder Dimethylenisosorbid, Dimethylenisomannid oder Dimethylenisoidid ist, das Polymer also aus Bausteinen aufgebaut ist, die aus nachwachsenden Quellen, wie beispielsweise Zuckern stammen.

US 2013/0171397 offenbart Polyester, die ganz oder teilweise aus Biomasse hergestellt werden. Die beschriebenen Polyester haben die gewünschten physikalischen und thermischen Eigenschaften um ganz oder teilweise Polyester aus fossilen Quellen zu ersetzen.

EP 2 657 996 betrifft drucksensible Klebstoffe, die durch Reaktion eines Polykondensats, das aus einem Furansäure-Derivat und einem Dimer eines Fettsäurealkohols, einem Dimer einer Fettsäure und/oder dessen Ester, einem Dimer eines Fettsäureamins und/oder dem Dimer eines Fettsäureisocyanats erhalten wird, und einem Vernetzungsmittels mit wenigstens zwei funktionellen Gruppen pro Molekül gewonnen wird.

Die im Stand der Technik beschriebenen Ansätze berücksichtigen allerdings nicht, dass sich das Bedürfnis nach Nachhaltigkeit nicht auf die fertigen Produkte beschränkt, sondern auch beim Herstellungs- und Fertigungsprozess eine große Rolle spielt. So bleibt unberücksichtigt, dass auch Hilfsstoffe, die bei der Herstellung von Produkten eingesetzt werden, wie beispielsweise Klebstoffe, vom Prinzip der Nachhaltigkeit mit umfasst sein sollten. Daher besteht weiterhin der Bedarf nach chemischen Verbindungen aus nachwachsenden Rohstoffen, die bei der Verarbeitung eingesetzt werden können, beispielsweise als Klebstoffe und die zumindest die gleichen physikalischen Eigenschaften wie entsprechende Verbindungen auf Erdölbasis aufweisen.

Es ist daher Aufgabe der vorliegenden Erfindung einen Klebstoff zur Verfügung zu stellen, dessen Komponenten zumindest teilweise auf Basis nachwachsender Rohstoffe hergestellt sind und der außerdem für den Einsatz in der Lebensmittelindustrie, speziell für die Verpackung von Lebensmitteln geeignet ist.

Im Rahmen der vorliegenden Erfindung wurde überraschend gefunden, dass diese Aufgabe durch die Bereitstellung eines Klebstoffs gelöst wird, der als Komponenten ein Polyesterpolyol auf Basis von Furandicarbonsäure enthält, die aus nachwachsenden Rohstoffen gewonnen wurde.

Ein erster Gegenstand der vorliegenden Erfindung ist daher ein Klebstoff zum Kleben von Kunststoff- und/oder Metallsubstraten, der mindestens ein Polyesterpolyol auf Basis eines Gemischs von Furandicarbonsäure (FDCA) mit einer oder mehrerer aliphatischen Disäuren und mindestens eine NCO-Gruppen enthaltende Verbindung umfasst, wobei die verwendete Furandicarbonsäure aus nachwachsenden Rohstoffen gewonnen wird und der Klebstoff eine Viskosität im Bereich von 200 bis 10000 mPas aufweist, gemessen bei 10 bis 60 °C, Brookfield Viskosimeter, gemäß EN ISO 2555.

Unter nachwachsenden Rohstoffen im Sinne der vorliegenden Erfindung sind organische Rohstoffe zu verstehen, die aus land- und forstwirtschaftlicher Produktion stammen, insbesondere Rohstoffe pflanzlicher Herkunft und biogene Abfallprodukte. Als nachwachsende Rohstoffe kommen beispielsweise Holz, Naturfasern wie Baumwolle, Pflanzenöle, Zucker und Stärke in Betracht.

Geeignete nachwachsende Rohstoffe für die Herstellung von Furandicarbonsäure sind beispielsweise Zucker oder Polysaccharide. Die benötigten Cs- Zucker und Polysaccharide entstehen unter anderem beim Abbau von Biomasse. Furandicarbonsäure kann beispielsweise durch Oxidation von Hydroxymethylfurfural hergestellt werden, das wiederum aus den aus der Biomasse isolierten Zuckern zugänglich ist.

Daher ist eine Ausführungsform der vorliegenden Erfindung bevorzugt, in der die Furandicarbonsäure aus Zuckern und/oder Polysacchariden gewonnen wird, die vorzugsweise aus dem Abbau von Biomasse stammen.

Eine andere Rohstoffquelle, aus der sich Furandicarbonsäure herstellen lässt sind Cellulosen. Daher ist alternativ eine Ausführungsform bevorzugt, bei der die Furandicarbonsäure ausgehend von Cellulose und/oder Cellulose-Derivanten hergestellt wird.

### A. Polyesterpolyol

Bei dem Polyesterpolyol, das in dem erfindungsgemäßen Klebstoff eingesetzt wird, handelt es sich vorzugsweise um ein Umsetzungprodukt aus der Reaktion von Furandicarbonsäure mit einem Polyol.

Polyol im Sinne der vorliegenden Erfindung sind Verbindungen, die mindestens zwei aktive OH-Gruppen enthalten. Besonders bevorzugt handelt es sich bei dem Polyol um ein Diol oder ein Triol.

An das verwendete Polyol sind keine besonderen Anforderungen zu stellen. Vielmehr ist eine Vielzahl von Polyolen einsetzbar, die eine individuelle Anpassung der Eigenschaften des verwendeten Polyesterpolyols an die jeweiligen Anforderungen erlauben.

Das Polyol ist vorzugsweise ausgewählt aus der Gruppe bestehend aus aliphatischen Polyolen, Polyesterpolyolen und Polyetherpolyolen, insbesondere Polycarbonatpolyolen, Polycaprolactonpolyolen, Polybutadienpolyolen, Polysulfidpolyolen sowie Mischungen hiervon.

Geeignete Polyetherpolyole umfassen lineare und/oder verzweigte Polyether, die eine Vielzahl von Etherbindungen und wenigstens zwei Hydroxylgruppen aufweisen und vorzugsweise keine weiteren funktionellen Gruppen neben den Hydroxylgruppen enthalten. Beispiele solcher geeigneten Polyetherpolyole sind Polyoxyalkylenpolyole wie Polyethylenglykol, Polypropylenglykol, Polytetramethylglykol und Polybutylglykol. Des Weiteren können Homopolymere und Copolymere der genannten Polyoxyalkylenpolyole sowie Mischungen davon eingesetzt werden. Besonders geeignete Copolymere der Polyoxyalkylenpolyole sind solche, die ein Addukt wenigstens einer Verbindung aus der Gruppe bestehend aus Ethylenglykol, Propylenglykol, Diethylenglykol, Propylenglykol, Triethylenglykol, 2-Ethylhexandiol-1,3-glycerin, 1,2,6-Hexantriol, Trimethylolpropan, Trimethylolethan, Tris(hydroxyphenyl)propane, Triethanolamin und Triisopropylamin mit wenigstens einer Verbindung ausgewählt aus der Gruppe bestehend aus Ethylenoxid, Propylenoxid und Butylenoxid aufweisen.

In einer besonders bevorzugten Ausführungsform ist das Polyol ausgewählt aus der Gruppe bestehend aus Polypropylenglykol, Polytetramethylglykol und statistischen Copolymeren und/oder Blockcopolymeren des Ethylenoxids und Propylenoxids.

In einer alternativ bevorzugten Ausführungsform handelt es sich bei dem Polyol um einen Polyester. Geeignete Polyesterpolyole können beispielsweise durch Kondensation ein oder mehrerer mehrwertiger Alkohole mit 2 bis 15 Kohlenstoffatomen mit ein oder mehrerer Polycarbonsäuren mit 2 bis 14 Kohlenstoffatomen gebildet werden. Beispiele geeigneter mehrwertiger Alkohole umfassen Ethylenglykol, Neopentylglykol, Glycerin, Propylenglykole wie 1,2-Propylenglykol und 1,3-Propylenglykol, Pentaerythriol, Trimethylolpropan, 1,4,6-Oktantriol, Butandiol, Pentandiol, insbesondere 1,4-Pentandiol, Hexandiol, Dodecandiol, Oktandiol, Chloropentandiol, Glycerinmonoallylether, Glycerinmonoethylether, Diethylenglykol, 2-Ethylhexandiol, 1,4-Cyclohexandiol, 1,2,6-Hexantriol, 1,3,5-Hexantriol und 1,3-Bis-(2-hydroxyethoxy)propan.

Weitere Polyesterpolyole, die in der erfindungsgemäßen Zusammensetzung Anwendung finden, können auf Grundlage von Estern des Glycerols mit Fettsäuren gebildet werden. Diese Ester werden allgemein unter dem generischen Begriff der Pflanzenöle zusammengefasst. Geeignete Verbindungen sind beispielsweise Leinöl, Sojaöl, Rapsöl, Sonnenblumenöl, Palmöl, Distelöl, Fischöl und Rizinusöl.

Insbesondere hinsichtlich der Verarbeitungseigenschaften des Polyesterpolyols, das in der erfindungsgemäßen Klebstoffzusammensetzung eingesetzt wird, hat es sich als vorteilhaft erwiesen, wenn das Polyesterpolyol auf Basis von Furandicarbonsäure weitere funktionelle Einheiten aufweist. Daher ist eine Ausführungsform bevorzugt, in der es sich bei dem Polyesterpolyol um ein Polyesterpolyol auf Basis eines Gemischs von Furandicarbonsäure mit einer oder mehrerer aliphatischen Disäuren. Insbesondere ist/sind die weitere(n) Carbonsäure(n) ausgewählt aus der Gruppe bestehend aus Bernsteinsäure, Adipinsäure, Dodekandisäure, Azelainsäure und Sebacinsäure sowie Mischungen davon, wobei die Säure vorzugsweise aus nachwachsenden Rohstoffen gewonnen wird.

In einer bevorzugten Ausführungsform der Erfindung ist das Polyol ein Polyol, das aus nachwachsenden Rohstoffen gewonnen wird. Auf diese Weise kann die Nachhaltigkeit des erfindungsgemäßen Klebstoffs weiter erhöht werden. In einer besonders bevorzugten Ausführungsform ist das Polyol daher ausgewählt aus der Gruppe bestehend aus Ethylenglykol, Diethylenglykol, Triethylenglykol, 1,3-Propandiol, 1,2-Propandiol, 1,4 Butandiol und 1,4-Pentandiol. Dabei handelt es sich jeweils um Verbindungen, die aus nachwachsenden Rohstoffen zugänglich sind.

In einer weiterhin bevorzugten Ausführungsform der vorliegenden Erfindung wird das eingesetzte Polyesterpolyol komplett aus nachwachsenden Rohstoffen gewonnen. Um die Umweltverträglichkeit des erfindungsgemäßen Klebstoffs weiter zu verbessern, ist eine Ausführungsform bevorzugt, in der der Anteil an Polyesterpolyol aus nachwachsenden Rohstoffen mindestens 80 Gew.-%, vorzugsweise 90 Gew.-% und besonders bevorzugt 95 Gew.-% bis 100 Gew.-% beträgt, jeweils bezogen auf das Gesamtgewicht der Polyesterpolyole im Klebstoff. Es wurde überraschend gefunden, dass trotz eines hohen Anteils an Polyesterpolyol auf Basis von nachwachsenden Rohstoffen die mechanischen und physikalischen Eigenschaften des erfindungsgemäßen Klebstoffs mit denen herkömmlicher Klebstoffe vergleichbar sind, deren Inhaltsstoffe auf die herkömmliche Weise aus fossilen Quellen hergestellt wurden.

### B. NCO-Gruppen enthaltende Verbindung

Neben dem Polyesterpolyol enthält der erfindungsgemäße Klebstoff weiterhin eine NCO-Gruppen enthaltende Verbindung. Die NCO-Gruppen enthaltende Verbindung ist vorzugsweise ausgewählt aus der Gruppe bestehend aus Polyisocyanaten und NCO-haltigen Prepolymeren.

Polyisocyanate im Sinne der vorliegenden Erfindung sind Verbindungen, die mindestens zwei aktive NCO-Gruppen enthalten, vorzugsweise Diisocyanate oder Triisocyanate.

In einer bevorzugten Ausführungsform ist die NCO-Gruppen enthaltende Verbindung ausgewählt aus der Gruppe bestehend aus 1,5-Naphthylendiisocyanat (NDI), 2,4'- oder 4,4'-Diphenylmethandiisocyanat (MDI), Isomere des Toluylendiisocyanats (TDI), Methylentriphenyltriisocyanat (MIT), hydriertes MDI (H12MDI), Tetramethylxylylendiisocyanat (TMXDI), 1-Isocyanatomethyl-3-isocyanato-1,5,5-trimethylcyclohexan (IPDI), Xylylendiisocyanat (XDI), Hexan-1,6-diisocyanat (HDI), Pentamethylendiisocyanat und Dicyclohexylmethandiisocyanat sowie Oligomere und Polymere hiervon.

Geeignete NCO-haltige Prepolymere sind Umsetzungsprodukte von OH-Gruppen und/oder NH-Gruppen tragenden Verbindungen mit einem Überschuss an Polyisocyanaten, wobei an die eingesetzten Polymere und Polyisocyanate keine besonderen Anforderungen zu stellen sind. Bei den Polyisocyanaten kann es sich beispielsweise um die oben genannten handeln. Als NH-Gruppen tragende Verbindungen können beispielsweise Polyetheramine eingesetzt werden. Als OH-Gruppen tragende Verbindungen können die oben aufgeführten Polyole verwendet werden, wobei das erhaltene Prepolymer dann mit einem anderen oder dem gleichen Polyol weiterumgesetzt werden kann.

Besonders bevorzugt ist eine Ausführungsform der vorliegenden Erfindung, in der auch die NCO-Gruppen enthaltende Verbindung ausgehend von nachwachsenden Rohstoffen hergestellt wird, wie beispielsweise Pentamethylendiisocyanat. Vorzugsweise wird das Pentamethylendiisocyanat als Trimer eingesetzt.

Die Menge an NCO-Gruppen enthaltender Verbindung kann dazu verwendet werden, die Reaktionsführung der Umsetzungsreaktion mit dem Polyesterpolyol zu beeinflussen. Wird die NCO-Gruppen enthaltende Verbindung im Überschuss eingesetzt, entstehen Polymermischungen, die nicht abreagierte NCO-Gruppen enthalten. Auf diese Weise sind insbesondere Verbindungen mit geringem Molekulargewicht zugänglich. Werden dagegen geringe Mengen an NCO-Gruppen enthaltender Verbindung eingesetzt oder wird die Reaktion stufenweise durchgeführt, kann das Molekulargewicht der erhaltenen Polymere im Vergleich zu den Ausgangsverbindungen erhöht werden. In einer bevorzugten Ausführungsform beträgt das Stoffmengenverhältnis von NCO:OH in dem erfindungsgemäßen Klebstoff daher 1,2:1 bis 2,9:1, vorzugsweise 1,5:1 bis 2:1.

Um die Reaktion zwischen Polyesterpolyol und der NCO-Gruppen enthaltenden Verbindung zu fördern und somit das Aushärten des Klebstoffs zu beschleunigen, können Katalysatoren eingesetzt werden. Daher ist eine Ausführungsform bevorzugt, in der der erfindungsgemäße Klebstoff weiterhin einen Katalysator enthält, der in der Lage ist die Reaktion zwischen dem Polyesterpolyol und der NCO-Gruppen enthaltenden Verbindung zu katalysieren. Bei dem Katalysator handelt es sich vorzugsweise um eine Metallverbindung von Sn, Ti, Fe, Zn, Bi, Hg, Pb oder um tertiäre Amine.

Besonders bevorzugt handelt es sich bei dem Katalysator um Titanate wie Tetrabutyltitanat und Tetrapropyltitanat, Zinncarboxylate wie Dibutlyzinndilaurat (DBTL), Dibutlyzinndiacetat, Zinnoctoat, Zinnoxide wie Dibutlyzinnoxid und Dioctylzinnoxid, Organoaluminiumverbindungen wie Aluminiumtrisacetalacetonat, Aluminiumtrisethylacetonat, Chelatverbindungen wie Titantetraacetylacetonat, Aminverbindungen wie Triethylendiamin, Guanidin, Diphenylguanidin, 2,4,6-Tris(dimethylaminomethyl)phenol, Morpholin, N-Methylmorpholin, 2-Ethyl-4-methylimidazol, 1,8-Diazabicyclo-(5,4,0)-undecan-7 (DBU), 1,4-Diazabicyclooktan (DABCO), 1,4-Diazabicyclo[2,2,2]octan, N,N-Dimethylpiperazin, 1,8-Diazabicyclo[5,4,0]undec-7-en, Dimorpholinodimethylether, Dimorpholinodiethylether (DMDEE) und Mischungen hiervon.

Die Menge des Kataysators liegt dabei vorzugweise bei 0,01 bis 5 Gew.-%, besonders bevorzugt bei 0,05 bis 2 Gew.-%, bezogen auf das Gesamtgewicht des Klebstoffs.

Der erfindungsgemäße Klebststoff kann zusätzlich weitere Komponenten enthalten. So hat es sich als vorteilhaft erwiesen, wenn dem Klebstoff ein oder mehrere weitere Polyesterpolyole, insbesondere solche auf Basis aliphatischer Disäuren, zugefügt werden. Es wurde überraschend gefunden, dass auf diese Weise insbesondere die Viskosität des Klebstoff den jeweiligen Anforderungen entsprechend eingestellt werden kann. Vorzugsweise handelt es sich bei den Polyesterpolyolen auf Basis aliphatischer Disäure um solche, die auf Basis nachwachsender Rohstoffe hergestellt werden. In einer besonders bevorzugten Ausführungsform ist das weitere Polyesterpolyol ein Polyesterpolyol auf Basis einer Säure, die ausgewählt ist aus der Gruppe bestehend aus Bernsteinsäure, Adipinsäure, Dodekandisäure, Azelainsäure und Sebacinsäure sowie Mischungen davon, wobei die Säure vorzugsweise aus nachwachsenden Rohstoffen gewonnen wurde.

Um die physikalischen und mechanischen Eigenschaften des Klebstoffs an die jeweiligen Anforderungen anzupassen, können dem Klebstoff Zusatzstoffe zugesetzt werden. Bei diesen Zusatzstoffen kann es sich beispielsweise um Weichmacher, Harze, Stabilisatoren, Pigmente oder Füllstoffe handeln. An die eingesetzten Verbindungen sind keine besonderen Anforderungen zu stellen. Es sind jedoch solche Verbindungen bevorzugt, die lebensmittelrechtlich unbedenklich sind und vorzugsweise aus nachwachsenden Rohstoffen hergestellt werden können und/oder hergestellt wurden.

In einer weiterhin bevorzugten Ausführungsform kann der Klebstoff weiterhin Haftvermittler enthalten. Dabei kann es sich beispielsweise um polyolefinische Haftvermittler oder Silanhaftvermittler handeln. Vorzugsweise handelt es sich bei den im Rahmen der vorliegenden Erfindung verwendeten Haftvermittler um Silanhaftvermittler, insbesondere Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)mercaptosilane und Aldiminosilane sowie oligomere Formen dieser Silane.

Je nach Anwendung und Einsatzgebiet kann es von Vorteil sein, wenn der Klebstoff weiterhin ein Lösemittel enhält. Daher ist eine Ausführungsform bevorzugt, in der der erfindungsgemäße Klebstoff lösemittelhaltig ist. Geeignete Lösemittel sind insbesondere solche, die bei Temperaturen bis zu 120°C verdampfen. Die Lösemittel können ausgewählt werden aus der Gruppe der aliphatischen Kohlenwasserstoffe, der aromatischen Kohlenwasserstoffe, Ketone oder Ester.

In anderen Anwendungsgebieten kann die Anwesenheit von Lösemitteln allerdings unerwünscht sein. Daher ist eine alternative Ausführungsform bevorzugt, in der der erfindungsgemäße Klebstoff lösemittelfrei ist.

In einer anderen bevorzugten Ausführungsform ist der Klebstoff eine Dispersion auf Basis von Wasser.

Bei dem erfindungsgemäßen Klebstoff handelt es sich vorzugweise um einen niederviskosen Klebstoff. Der erfindungsgemäße Klebstoff weist daher eine Viskosität im Bereich von 200 bis 10000 mPas, vorzugsweise 500 bis 3000 mPas auf, gemessen bei 10 bis 60°C, Brookfield-Viskosimeter, gemäß EN ISO 2555. Eine Viskosität im angebebenen Bereich macht den erfindungsgemäßen Klebstoff besonders geeignet für das Kleben von Foliensubstraten.

Der erfindungsgemäße Klebstoff weist vorzugsweise ein Auftragstemperatur von 10 bis 75°C, vorzugsweise 15 bis 60°C auf. Es wurde überraschend gefunden, dass eine Auftragstemperatur in diesem Bereich das Auftragen des erfindungsgemäßen Klebstoffs auf große Flächen erlaubt.

Neben den üblichen Anforderungen, die an Klebstoffe bezüglich ihrer Gesundsheitsschädlichkeit gestellt werden, unterliegen Klebstoffe, die zur Herstellung von Lebensmittelverpackungen eingesetzt werden, besonderen Bestimmungen. So muss nicht nur der Klebstoff selbst lebensmittelrechlich unbenklich sein. Auch der Gehalt an Neben- oder Zersetzungsprodukten sollte so gering wie möglich sein. Eine Gruppe von Verbindungen, die hier eine Rolle spielt, ist die der sogenannten migrationsfähigen Verbindungen, also Verbindungen, die durch das Verpackungsmaterial in das verpackte Lebensmittel migrieren können. Bei diesen Verbindungen handelt es sich meist um Verbindungen, die keine Funktionalität aufweisen und daher nicht in den Matrixverbund eingebunden sind. Ein solche Verbindungsklasse sind zyklische Esterverbindungen, die herstellungsbedingt in der Polyesterpolyol-Komponente vorhanden sein können. Es wurde überraschend gefunden, dass die Anzahl der zyklischen Ester im Polyesterpolyol durch den Einsatz von Furandicarbonsäure, die aus nachwachsenden Rohstoffen hergestellt wurde, verringert werden kann. So weisen Polyesterpolyle auf Basis von Furandicarbonsäure die in der vorliegenden Erfindung verwendet werden, einen um bis zu Faktor 10 geringeren Anteil an zyklischen Estern auf als vergleichbare Polyesterpolyole auf Basis fossiler Quellen. Daher ist eine Ausführungsform bevorzugt, in der der Anteil an zyklischen Estern im Polyesterpolyol im erfindungsgemäßen Klebstoff nicht mehr als 5000 ppm, vorzugsweise nicht mehr als 4000 ppm, besonders bevorzugt zwischen 0 und 3500 ppm beträgt, wobei sich die ppm auf Massenteile beziehen.

Der erfindungsgemäße Klebstoff ist insbesondere zum Kleben von folienförmigen Substraten geeignet. Daher ist ein weiterer Gegenstand der vorliegenden Erfindung ein Verfahren zum Kleben von Substraten, insbesondere folienförmigen Substraten. In dem erfindungsgemäßen Verfahren wird der erfindungsgemäße Klebstoff auf mindestens ein Substrat aufgebracht und dann mit mindestens einem weiteren Substrat zusammengefügt.

In einer bevorzugten Ausführungsform können die Substrate dabei einer Vorbehandlung unterworfen werden. In einer weiterhin bevorzugten Ausführungsform kann das Zusammenfügen der Substrate unter Druck erfolgen.

Es wurde überraschend gefunden, dass sich das erfindungsgemäße Verfahren auch zum Kleben von Metallsubstraten und bedruckten Oberflächen eignet. Daher ist eine Ausfühungsform bevorzugt, in der mindestens eines der Substrate eine Metalloberfläche oder eine bedruckte Oberfläche aufweist. Für den Fall, dass es sich um eine bedruckte Oberfläche handelt, wird der erfindungsgemäße Klebstoff vorzugsweise auf die der bedruckten Oberfläche gegenüberliegende Oberfläche des Substrats aufgebracht.

Lebensmittel werden meist in Folien verpackt, um die Haltbarkeit des Lebensmittels zu verlängern und dessen Geschmack und Aroma zu erhalten. Daher ist eine Ausführungsform des Verfahrens bevorzugt, in der der Klebstoff auf ein erstes folienförmiges Substrat aufgetragen und dieses dann mit einem zweiten folienförmigen Substrat verklebt wird. Bei dem folienförmigen Substrat kann es sich beispielsweise um eine Metallfolie oder einen Folienverbund handeln.

Die Nachhaltigkeit eines Stoffes lässt sich nicht nur dadurch verbessern, dass er aus nachwachsenden Rohstoffen hergestellt wird. Auch eine Leistungssteigerung des Stoffes kann zur Nachhaltigkeit beitragen, da sich dadurch die benötigte Menge reduzieren lässt. Es wurde überraschend gefunden, dass die Menge an benötigtem erfindungsgemäßen Klebstoff zum Kleben von wenigstens zwei Substraten gegenüber herkömmlichen Klebstoffen deutlich reduziert werden kann, ohne dass die Klebewirkung negativ beeinflusst wird. Daher ist eine Ausführungsform des erfindungsgemäßen Verfahrens bevorzugt, in der der Klebstoff in einer Menge von 1 bis 100 g/m², vorzugsweise 2 bis 35 g/m² auf das Substrat aufgetragen wird.

Ein weiterer Gegenstand der vorliegenden Erfindung ist ein Artikel, der gemäß dem erfindungsgemäßen Verfahren erhältlich ist. Bei dem Artikel handelt es sich vorzugsweise um ein Foliensubstrat, das mit dem erfindungsgemäßen Klebstoff verklebt ist. Besonders bevorzugt handelt es sich bei dem Artikel um eine Lebensmittelverpackung.

Ein weiterer Gegenstand der vorliegenden Erfindung ist ein ausgehärteter Klebstoff, erhältlich durch Aushärten des erfindungsgemäßen Klebstoffs. Das Aushärten kann dabei auf dem Fachmann bekannte Art und Weise erfolgen, beispielsweise durch Bestrahlen mit Licht oder in Gegenwart von Feuchtigkeit. Weiterhin ist ein Gegenstand der vorliegenden Erfindung ein Artikel, vorzugsweise eine Lebensmittelverpackung, der den ausgehärteten Klebstoff umfasst.

Furandicarbonsäure ist eine gängige chemische Verbindung, die eine Vielzahl von Anwendungen findet. Auch Furandicarbonsäure, die aus nachwachsenden Rohstoffen hergestellt wurde, ist dem Fachmann bekannt. Im Rahmen der vorliegenden Erfindung wurde überraschend gefunden, dass Furandicarbonsäure aus nachwachsenden Rohstoffen auch erfolgreich zur Herstellung von Klebstoffen eingesetzt werden kann. Daher ist ein weiterer Gegenstand der vorliegenden Erfindung die Verwendung von Furandicarbonsäure aus nachwachsenden Rohstoffen zur Herstellung von Klebstoffen.

### Beispiele

Die vorliegende Erfindung wird anhand der folgenden Beispiele verdeutlicht, wobei diese nicht als Einschränkung des Erfindungsgedanken zu verstehen sind.

### a) Messmethoden

Die Säurezahl wurde gemäß DIN EN ISO 2114 bestimmt, .

Die Anzahl der OH-Gruppen wurde gemäß DIN 53240-2 bestimmt.

Die Viskosität wurde mittels Brookfield (Thermosel), Spindel 27 bei 10 Umdrehungen/Minute bestimmt.

### b) Verwendete Ausgangsstoffe

Adipinsäure, erhältlich von BASF SE, Deutschland
2,5-Furandicarbonsäure aus nachwachsenden Rohstoffen, beispielsweise erhältlich von Synvina C.V, Niederlande
Diethylenglykol aus nachwachsenden Rohstoffen, beispielsweise erhältlich von India-Glycols Ldt., Indien
Desmodur L 75 und Desmodur N 3300, erhältlich von Covestro AG, Deutschland
LOCTITE LIOFOL LA 7707 und LOCTITE LIOFOL LA 6707, erhältlich von Henkel AG & Co. KGaA, Deutschland

### 1. Synthese von Polyesterpolyol auf Basis von Furandicarbonsäure (FDCA) mit hohem Gehalt an FDCA

In einem 11-Vierhalskolben mit Stickstoffeinlass, Thermoelement, Rührer und Destillationsarm wurden 119 g Adipinsäure (17,05 Mol-%), 195,72 g 2,5-Furandicarbonsäure aus nachwachsenden Rohstoffen (26,35 Mol-%) und 286 g Diethylenglykol (56,6 Mol-%) gemischt. Die Mischung wurde unter einem Stickstoffstrom auf 200°C erwärmt und ungefähr 8 Stunden gerührt. Dann wurde die Reaktionsmischung abgekühlt und 0,02 Gew.-% Titanisopropoxid, bezogen auf das Gesamtgewicht des Rohmaterials, zugegeben und der Druck des Reaktionsgemischs schrittweise auf 30 mbar reduziert um eine komplette Umsetzung zu erreichen. Sobald eine Säurezahl von 2 oder weniger erreicht war, wurde die Reaktionsmischung gekühlt. Das erhaltene Polyesterpolyol hatte die folgenden Eigenschaften:
Säurezahl: 1,4 mg KOH/g
OH-Zahl: 121 mg KOH/g
Viskosität: 12000 mPas (gemessen bei 50°C)
   115000 mPas (gemessen bei Raumtemperatur)
Molekulargewicht (M_{w}): 2946 g/mol
Molekulargewicht (Mₙ): 1898 g/mol
Polydispersität: 1,6 (gemessen mittels GPC).

Der Gehalt an zyklischen Estern in dem Polyesterpolyol gemäß Beispiel 1 und einem konventionellen Ester wurde verglichen. Als Vergleich wurde ein Polyesterpolyol auf Basis von Isophthalsäure gewählt. Zur Bestimmung des Anteils der zyklischen Ester wurde die GC-MS-Methode verwendet.

Das erhaltene Polyesterpolyol nach Beispiel 1 und das Vergleichspolyesterpolyol wurden jeweils in Headspace-Vials eingewogen und mit 99,8%igem Ethanol versetzt. Anschließend wurden die Gebinde dicht verschlossen und die Proben 2 Stunden bei 70°C extrahiert. Von den Extrakten wurde anschließend jeweils 1 ml abgenommen, mit internem Standard (Naphthalin-D8) versetzt und per GC-MS vermessen. Pro Probe wurde ca. 1 g Substanz extrahiert. Die Identifizierung erfolgte gegen Naphthalin-D8 mit Responsefaktor 1 (RF = 1). Die Ergebnisse sind in Tabelle 1 zusammengefasst.

**Tabelle 1:**

| Probe | Zyklentyp | Zyklenkonzentration |
|---|---|---|
| Referenz | 2AA + 2DEG | 2000 ppm |
| | AA + DEG | 3500 ppm |
| | AA + IA + 2DEG | 6200 ppm |
| | 2IA + 2DEG | 4000 ppm |
| | | |
| Beispiel 1 | 2AA + 2DEG | 330-510 ppm |
| | AA + DEG | 900 ppm |
| | AA + FDCA + 2 DEG | 820-940 ppm |
| | 2FDCA + 2DEG | 410 ppm |

| | | |
|---|---|---|
| AA: Adipinsäure DEG: Diethylenglykol IA: Isophthalsäure FDCA: Furandicarbonsäure | | |

Wie sich aus Tabelle 1 entnehmen lässt, ist der Anteil an zyklischen Estern in dem Polyesterpolyol gemäß Beispiel 1 deutlich geringer als bei der Vergleichsprobe. In der Vergleichsprobe wurde eine Menge an zyklischen Estern von 15700 ppm gefunden, während in dem Polyesterpolyol gemäß Beispiel 1 die Menge an zyklischen Estern zwischen 2460 und 2760 ppm lag.

### 2. Synthese von Polyesterpolyol auf Basis von Furandicarbonsäure (FDCA) mit geringem Gehalt an FDCA

In einem 11-Vierhalskolben mit Stickstoffeinlass, Thermoelement, Rührer und Destillationsarm wurden 205 g Adipinsäure (41 Mol-%), 16 g 2,5- Furandicarbonsäure aus nachwachsenden Rohstoffen (2,92 Mol-%), 53 g 1,2-Propylenglykol (20,35 Mol-%) und 130 g Diethylenglykol (35,73 Mol-%) gemischt. Die Mischung wurde unter einem Stickstoffstrom auf 200°C erwärmt und ungefähr 8 Stunden gerührt. Dann wurde die Reaktionsmischung abgekühlt und 0,02 Gew.-% Titanisopropoxid, bezogen auf das Gesamtgewicht des Rohmaterials, zugegeben und der Druck des Reaktionsgemischs schrittweise auf 30 mbar reduziert um eine komplette Umsetzung zu erreichen. Sobald eine Säurezahl von 2 oder weniger erreicht war, wurde die Reaktionsmischung gekühlt. Das erhaltene Polyesterpolyol hatte die folgenden Eigenschaften:

| | |
|---|---|
| Säurezahl: | 0,2 mg KOH/g |
| OH-Zahl: | 124 mg KOH/g |
| Viskosität: | 2400 mPas (gemessen bei Raumtemperatur) |
| Molekulargewicht (M_{w}): | 3094 g/mol |
| Molekulargewicht (Mₙ): | 1779 g/mol |
| Polydispersität: | 1,7 (gemessen mittels GPC). |

### 3. Laminierklebstoff I

### Stufe 1:

79,33 g Ethylacetat und 91,06 g des Polyesterpolyols aus Beispiel 1 wurden in einem Reaktor vorgelegt und vermischt. Nachdem eine homogene Mischung vorlag, wurde eine Probe zur Bestimmung des Wasseranteils genommen. Der Wasseranteil sollte bei < 300 ppm liegen.

4,4'-MDI (Additionsverhältnis 4,4'-MDI : Polyesterpolyol = Stoffmenge NCO:OH = 1,9:1; NCO-Anteil 4,4'-MDI = 33,5%) wurde zu der Mischung gegeben und 2,75 Stunden bei 78°C umgesetzt. Nach Erreichen des theoretischen NCO-Anteils (1,85% [+/- 0,1%]) wurde die Temperatur gesenkt, indem die Kühlung eingeschaltet und auf unterhalb von 75°C abgekühlt wurde.

### Stufe 2:

Sobald eine Temperatur unterhalb von 75°C erreicht wurde, wurden 2,14 g eines Silan-Haftvermittlers sowie 0,98 g eines aromatischen trifunktionellen Isocyanats (Desmodur L 75) und 4,02 g eines aliphatischen trifunktionellen Isocyanats (Desmodur N3300) zugegeben und die Mischung weiter abgekühlt.

Die Mischung wurde 15 Minuten homogenisiert und eine Probe zur Bestimmung des NCO-Anteils genommen (NCO-Sollwert Stufe 2: 2,35%). Dann wurde weiter auf eine Temperatur von 50°C bis 40°C abgekühlt und die Mischung in vorbereitete Gebinde gefüllt.

### Folienkaschierung

Es wurden jeweils Folienmuster in DIN A4-Größe mittels einer Drahtrakel mit dem Klebstoff beschichtet, das Lösemittel im Trockenschrank verdampft und die Folien mittels eines Rollenlaminators kaschiert. Es wurde ein PET/Al/cPP Verbund hergestellt, wobei sich der Klebstoff in der Lage Al/cPP befand. Der Kunststoffauftrag lag bei 3,5 g/m². Die Verbundhaftung nach Aushärtung (14 Tage bei Raumtemperatur) lag bei 3,6/3,7 N/15mm.

Die Verbundhaftung nach Sterilisation (45 Minuten bei 134°C nach Aushärtung) lag bei 4,6/4,7 N/15mm, womit die Marktanforderungen, die vorgeben, dass die Verbundhaftung mehr als 4 N/15mm sein muss, erfüllt sind.

### 4. Laminierklebstoff II

Das Polyesterpolyol gemäß Beispiel 2 wurde mit LA 7707 im oben angegebenen Verhältnis gemischt.

Als Referenz wurde der Kaschierklebstoff LOCTITE LIOFOL LA 7707 / LA 6707 gewählt.

### LA 7707:

Basiskomponente: NCO-termiertes Prepolymer, basierend auf PPG400, PPG1000, Rizinusöl und 4,4'-MDI.
NCO-Anteil: 12-12,6%
Viskosität: 3000-5000 mPas (gemessen bei 40°C)

### LA 6707:

Härterkomponente: OH-funktionell, basierend auf 100% Polyester PES 218
   OH-Zahl: 135 +/- 6 mg KOH/g
   Viskosität: 2000-3000 mPas (gemessen bei 20°C)
Mischungsverhältnis LA7707 / LA 6707 nach Gewicht: 100:75 (NCO:OH -1,6)

Für den Polyestervergleich wurde die auf 40°C vortemperierte Komponente LA 7707 nacheinander jeweils einmal mit LA 6707 und dem Polyesterpolyol gemäß Beispiel 2 gemischt und händisch ca. 1 Minute homogenisiert. Dazu wurden 500 g LA 7707 mit 375 g LA 6707 beziehungsweise 425 g Polyesterpolyol gemäß Beispiel 2 eingewogen und vermischt, so dass ein NCO:OH-Verhältnis von ca. 1,6 eingestellt wurde. Die Mischung wurde in den Walzenspalt einer Kaschieranlage (Polytype, Technikumsanlage) gefüllt. Als Trägerfolie wurde eine PET-Folie verwendet, auf die 2 g Klebstoffmischung auf 1 m² aufgetragen wurden. Dann wurde eine PE-Folie zugeführt und das entstehende PET/PE-Laminat aufgewickelt.

Der Verbund wurde bei Raumtemperatur gelagert und die Verbundhaftung von Proben der Rollen nach bestimmten Zeitabschnitten bestimmt.

Nach 14 Tagen wurde die Siegelnahthaftung bestimmt. Darüberhinaus wurden die Proben einem sogenannten Knittertest unterzogen, bei dem die Proben nach bestimmten Zeitintervallen scharf geknickt, mit einer Büroklammer fixiert und eine Stunden bei 80°C im Ofen gelagert werden.

Für die Prüfung des Verbunds wurden Proben in DIN A4-Größe gewählt. Diese wurden einmal in alle Richtungen (nach oben, rechts, unten, links) gefaltet, so dass die Kanten übereinander liegen und sich ein gefaltetes Endstück mit einer Fläche von ca. 5 cm x 7,5 cm ergibt. Die Kanten wurden mit einem Lineal unter leichtem Druck angepresst. Der viermal gefaltete Verbund wurde mit einer Büroklammer fixiert und für eine Stunde bei 80°C im Ofen gelagert. Anschließend wurden die Muster aus dem Ofen genommen, auseinander gefaltet und einer visuellen Prüfung unterzogen. Sind Delaminationen zu erkennen, ist der Test als nicht bestanden zu bewerten. Bei einem bestandenden Knittertest ist die Verbundhaftung so weit forgeschritten, dass das Laminat mechanischen und thermischen Belastungen widersteht.

Die Ergebisse der Tests sind in Tabelle 2 zusammengefasst:

**Tabelle 2:**

| | | Vergleich | Erfindungsgemäß |
|---|---|---|---|
| Verbundhaftung [N/15mm] | | | |
| | 1 Tag | 2,5 | 2,2 |
| | 2 Tage | 2,8 | 3,0 |
| | 3 Tage | 3,0 | 3,2 |
| | 4 Tage | 3,4 | 3,4 |
| | 7 Tage | 3,3 | 3,3 |
| | 14 Tage | untrennbar | untrennbar |

| Siegelnahthaftung [N/15mm] | | | |
|---|---|---|---|
| | 14 Tage | 38 | 41 |

| Knittertest | | | |
|---|---|---|---|
| | 1 Tag | mangelhaft | mangelhaft |
| | 2 Tage | OK | OK |

Wie sich aus der Tabelle entnehmen lässt, zeigt der erfindungsgemäße Klebstoff zufriedenstellende Ergebnisse, die vergleichbar mit denen eines herkömmlichen Klebstoffs sind beziehungsweise diese teilweise übersteigt.

## Patentansprüche

1. Klebstoff zum Kleben von Kunststoff- und/oder Metallsubstraten, wobei der Klebstoff mindestens ein Polyesterpolyol auf Basis eines Gemischs von Furandicarbonsäure (FDCA) mit einer oder mehrerer aliphatischen Disäuren und mindestens eine NCO-Gruppen enthaltende Verbindung umfasst, **dadurch gekennzeichnet, dass** die verwendete Furandicarbonsäure aus nachwachsenden Rohstoffen gewonnen wird und der Klebstoff eine Viskosität im Bereich von 200 bis 10000 mPas aufweist, gemessen bei 10 bis 60 °C, Brookfield Viskosimeter, gemäß EN ISO 2555.

2. Klebstoff gemäß Anspruch 1, **dadurch gekennzeichnet, dass** es sich bei dem Polyesterpolyol um ein Umsetzungsprodukt von Furandicarbonsäure mit einem Polyol handelt.

3. Klebstoff gemäß Anspruch 2, **dadurch gekennzeichnet, dass** es sich bei dem Polyol um ein Diol handelt, vorzugsweise um ein Diol, das aus nachwachsenden Rohstoffen gewonnen wird.

4. Klebstoff gemäß Anspruch 3, **dadurch gekennzeichnet, dass** das Polyesterpolyol komplett aus nachwachsenden Rohstoffen gewonnen wird.

5. Klebstoff gemäß Anspruch 4, **dadurch gekennzeichnet, dass** der Anteil an Polyesterpolyol aus nachwachsenden Rohstoffen mindestens 80 Gew.-%, vorzugsweise mindestens 90 Gew.-% beträgt, jeweils bezogen auf das Gesamtgewicht der Polyesterpolyole in dem Klebstoff.

6. Klebstoff gemäß mindestens einem der vorangehenden Ansprüche, **dadurch gekennzeichnet, dass** es sich bei der NCO-Gruppen enthaltenden Verbindung um ein Polyisocyanat mit zwei oder mehr Isocyanat-Gruppen handelt, vorzugsweise um eine Verbindung ausgewählt aus der Gruppe bestehend aus 1,5-Naphthylendiisocyanat (NDI), 2,4'- oder 4,4'-Diphenylmethandiisocyanat (MDI), Isomere des Toluylendiisocyanats (TDI), Methylentriphenyltriisocyanat (MIT), hydriertes MDI (H12MDI), Tetramethylxylylendiisocyanat (TMXDI), 1-Isocyanatomethyl-3-isocyanato-1,5,5-trimethylcyclohexan (IPDI), Xylylendiisocyanat (XDI), Hexan-1,6-diisocyanat (HDI), Pentamethylendiisocyanat und Dicyclohexylmethandiisocyanat sowie Oligomere und Polymere hiervon.

7. Klebstoff gemäß einem der vorangehenden Ansprüche, **dadurch gekennzeichnet, dass** es sich bei der NCO-Gruppen enthaltenden Verbindung um ein NCO-terminiertes Präpolymer handelt.

8. Klebstoff gemäß mindestens einem der vorangehenden Ansprüche, **dadurch gekennzeichnet, dass** der Klebstoff lösemittelhaltig oder lösemittelfrei ist oder als Dispersion auf Basis von Wasser vorliegt.

9. Verfahren zum Verkleben von mindestens zwei Substraten, wobei ein Klebstoff gemäß mindestens einem der Ansprüche 1 bis 8 auf mindestens ein Substrat aufgetragen wird und dieses dann mit mindestens einem weiteren Substrat zusammengefügt wird.

10. Verfahren gemäß Anspruch 9, **dadurch gekennzeichnet, dass** mindestens eines der Substrate eine Metalloberfläche oder eine bedruckte Oberfläche aufweist.

11. Verfahren nach mindestens einem der Ansprüche 9 oder 10, **dadurch gekennzeichnet, dass** der Klebstoff auf ein erstes folienförmiges Substrat aufgetragen und dieses dann mit einem zweiten folienförmigen Substrat verklebt wird.

12. Verfahren nach mindestens einem der vorangehenden Ansprüche, **dadurch gekennzeichnet, dass** der Klebstoff in einer Menge von 1 bis 100 g/m² aufgetragen wird.

13. Artikel erhältlich durch ein Verfahren gemäß mindestens einem der Ansprüche 9 bis 12.

14. Artikel gemäß Anspruch 13, **dadurch gekennzeichnet, dass** es sich bei dem Artikel um eine Lebensmittelverpackung handelt.

## Claims

1. An adhesive for bonding plastics and/or metal substrates, the adhesive comprising at least one polyester polyol based on a mixture of furandicarboxylic acid (FDCA) and one or more aliphatic diacids, and at least one compound containing NCO groups, **characterized in that** the furandicarboxylic acid used is obtained from renewable raw materials, and the adhesive has a viscosity in the range of from 200 to 10,000 mPas, measured at 10 to 60 °C, using a Brookfield viscometer, in accordance with EN ISO 2555.

2. The adhesive according to claim 1, **characterized in that** the polyester polyol is a reaction product of furandicarboxylic acid with a polyol.

3. The adhesive according to claim 2, **characterized in that** the polyol is a diol, preferably a diol which is obtained from renewable raw materials.

4. The adhesive according to claim 3, **characterized in that** the polyester polyol is obtained entirely from renewable raw materials.

5. The adhesive according to claim 4, **characterized in that** the proportion of polyester polyol from renewable raw materials is at least 80 wt.%, preferably at least 90 wt.%, in each case based on the total weight of the polyester polyols in the adhesive.

6. The adhesive according to at least one of the preceding claims, **characterized in that** the compound containing NCO groups is a polyisocyanate having two or more isocyanate groups, preferably a compound selected from the group consisting of 1,5-naphthylene diisocyanate (NDI), 2,4'- or 4,4'-diphenylmethane diisocyanate (MDI), isomers of toluene diisocyanate (TDI), methylene triphenyl triisocyanate (MIT), hydrogenated MDI (H12MDI), tetramethylxylylene diisocyanate (TMXDI), 1-isocyanatomethyl-3-isocyanato-1,5,5-trimethylcyclohexane (IPDI), xylylene diisocyanate (XDI), hexane-1,6-diisocyanate (HDI), pentamethylene diisocyanate and dicyclohexylmethane diisocyanate, as well as oligomers and polymers thereof.

7. The adhesive according to one of the preceding claims, **characterized in that** the compound containing NCO groups is an NCO-terminated prepolymer.

8. The adhesive according to at least one of the preceding claims, **characterized in that** the adhesive contains solvents or is solvent-free or is present as a water-based dispersion.

9. A method for bonding at least two substrates, wherein an adhesive according to at least one of claims 1 to 8 is applied to at least one substrate and said substrate is then joined together with at least one further substrate.

10. The method according to claim 9, **characterized in that** at least one of the substrates has a metal surface or a printed surface.

11. The method according to at least one of claims 9 or 10, **characterized in that** the adhesive is applied to a first film-like substrate and said substrate is then bonded to a second film-like substrate.

12. The method according to at least one of the preceding claims, **characterized in that** the adhesive is applied in an amount of from 1 to 100 g/m².

13. An article obtained using a method according to at least one of claims 9 to 12.

14. The article according to claim 13, **characterized in that** the article is food packaging.

## Revendications

1. Adhésif permettant le collage de substrats plastiques et/ou métalliques, l'adhésif comprenant au moins un polyester polyol à base d'un mélange d'acide furane dicarboxylique (FDCA) comportant un ou plusieurs diacides aliphatiques et au moins un composé contenant des groupes NCO, **caractérisé en ce que** l'acide furane dicarboxylique utilisé est obtenu à partir de matières premières renouvelables et l'adhésif possède une viscosité dans la plage de 200 à 10 000 mPas, mesurée à 10 à 60 °C, viscosimètre Brookfield, selon la norme EN ISO 2555.

2. Adhésif selon la revendication 1, **caractérisé en ce que** le polyester polyol est un produit de réaction d'acide furane dicarboxylique avec un polyol.

3. Adhésif selon la revendication 2, **caractérisé en ce que** le polyol est un diol, de préférence un diol obtenu à partir de matières premières renouvelables.

4. Adhésif selon la revendication 3, **caractérisé en ce que** le polyester polyol est entièrement obtenu à partir de matières premières renouvelables.

5. Adhésif selon la revendication 4, **caractérisé en ce que** la proportion de polyester polyol provenant de matières premières renouvelables est d'au moins 80 % en poids, de préférence d'au moins 90 % en poids, respectivement par rapport au poids total des polyester polyols dans l'adhésif.

6. Adhésif selon au moins l'une des revendications précédentes, **caractérisé en ce que** le composé contenant des groupes NCO est un polyisocyanate comportant deux groupes isocyanate ou plus, de préférence un composé choisi dans le groupe constitué par le diisocyanate de 1,5-naphtylène (NDI), le diisocyanate de 2,4'-diphénylméthane ou 4,4'-diphénylméthane (MDI), les isomères du diisocyanate de tolylène (TDI), le triisocyanate de méthylènetriphényle (MIT), le MDI hydrogéné (H12MDI), le diisocyanate de tétraméthylxylylène (TMXDI), le 1-isocyanatométhyl-3-isocyanato-1,5,5-triméthylcyclohexane (IPDI), le diisocyanate de xylylène (XDI), le diisocyanate d'hexane-1,6 (HDI), le diisocyanate de pentaméthylène et le diisocyanate de dicyclohexylméthane ainsi que leurs oligomères et polymères.

7. Adhésif selon l'une des revendications précédentes, **caractérisé en ce que** le composé contenant des groupes NCO est un prépolymère à terminaison NCO.

8. Adhésif selon au moins l'une des revendications précédentes, **caractérisé en ce que** l'adhésif contient des solvants ou est exempt de solvants ou est présent sous forme de dispersion à base d'eau.

9. Procédé de collage d'au moins deux substrats, dans lequel un adhésif selon au moins l'une des revendications 1 à 8 est appliqué sur au moins un substrat et celui-ci est ensuite lié à au moins un autre substrat.

10. Procédé selon la revendication 9, **caractérisé en ce qu'**au moins l'un des substrats présente une surface métallique ou une surface imprimée.

11. Procédé selon au moins l'une des revendications 9 ou 10, **caractérisé en ce que** l'adhésif est appliqué sur un premier substrat sous forme de film et celui-ci est ensuite collé sur un second substrat sous forme de film.

12. Procédé selon au moins l'une des revendications précédentes, **caractérisé en ce que** l'adhésif est appliqué en une quantité de 1 à 100 g/m².

13. Article pouvant être obtenu par un procédé selon au moins l'une des revendications 9 à 12.

14. Article selon la revendication 13, **caractérisé en ce que** l'article est un emballage alimentaire.
